(19) Europäisches Patentamt
European Patent Office
Office européen des brevets

(11) **EP 3 350 567 B1**

(12) **EUROPÄISCHE PATENTSCHRIFT**

(45) Veröffentlichungstag und Bekanntmachung des Hinweises auf die Patenterteilung:
**25.12.2024 Patentblatt 2024/52**

(21) Anmeldenummer: **16754530.0**

(22) Anmeldetag: **24.08.2016**

(51) Internationale Patentklassifikation (IPC):
*G01N 9/00* (2006.01)   *G01N 9/26* (2006.01)
*G01F 1/84* (2006.01)   *G01F 15/00* (2006.01)
*G01F 15/02* (2006.01)   *G01F 1/44* (2006.01)
*G01F 1/88* (2006.01)   *G01F 5/00* (2006.01)

(52) Gemeinsame Patentklassifikation (CPC):
**G01N 9/26; G01F 5/005; G01F 15/005; G01N 9/002**

(86) Internationale Anmeldenummer:
**PCT/EP2016/069996**

(87) Internationale Veröffentlichungsnummer:
**WO 2017/045887 (23.03.2017 Gazette 2017/12)**

(54) **VERFAHREN UND MESSVORRICHTUNG ZUM BESTIMMEN DER KOMPRESSIBILITÄT EINES STRÖMENDEN FLUIDS**

METHOD AND MEASUREMENT DEVICE FOR DETERMINING THE COMPRESSIBILITY OF A FLOWING FLUID

PROCÉDÉ ET DISPOSITIF DE MESURE POUR LA DÉTERMINATION DE LA COMPRESSIBILITÉ D'UN FLUIDE EN ÉCOULEMENT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **15.09.2015 DE 102015115499**

(43) Veröffentlichungstag der Anmeldung:
**25.07.2018 Patentblatt 2018/30**

(73) Patentinhaber: **Endress+Hauser Flowtec AG
4153 Reinach (CH)**

(72) Erfinder:
• **HUBER, Christof
3007 Bern (CH)**
• **LAMBRIGGER, Michael
4056 Basel (CH)**

(74) Vertreter: **Hahn, Christian et al
Endress+Hauser Group Services
(Deutschland)AG +Co. KG
Colmarer Straße 6
79576 Weil am Rhein (DE)**

(56) Entgegenhaltungen:
EP-A1- 1 502 085   EP-A1- 2 012 117
EP-A2- 2 365 298   WO-A1-2014/158376
CA-A1- 2 622 602   DE-B4- 102013 113 689
US-A- 5 400 657   US-A1- 2005 138 993
US-A1- 2008 053 220   US-A1- 2011 161 018
US-A1- 2012 085 434

**Beschreibung**

Die vorliegende Erfindung betrifft ein Verfahren zum Bestimmen der Kompressibilität eines strömenden Fluids.

Die Dichte eines Fluids bei Referenzbedingungen, insbesondere bei einem Referenzdruck von 1013 MPa, ist zur Bewertung von Fluiden von Interesse. Sie ist jedoch in vielen Anwendungsfällen nicht direkt verfügbar. Ein Ausweg besteht darin, die Dichte bei Referenzdruck aus einem Dichtemesswert zu berechnen, der bei einem höheren Druck erfasst wurde. Um diese Berechnung zuverlässig durchführen zu können, ist eine möglichst genaue Kenntnis der Kompressibilität erforderlich.

In US2008/053220 A1 soll die Dichte der inkompressiblen Phase einer Mischung eines gasbeladenen Schlickers bestimmt werden gemäß:

$$Dabs=D1/(1-((D1/D2-1)/(P1/P2-1)))$$

Hierbei ist Dabs die gesuchte Dichte der inkompressiblen Phase, während D1 und D2 Dichtemesswerte für die Mischung bei zugehörigen Druckmesswerten P1 und P2 sind. Hierbei wird der Schlicker durch zwei in Reihe geschaltete Dichtemesser gepumpt, wobei der Druckabfall über den ersten Dichtemesser einen geringeren statischen Druck im zweiten Dichtemesser bewirkt.

Gemäß CA 2 622 602 A1 strömt ein ggf. gasbeladenes Medium durch einen Coriolis-Massedurchflussmessgerät, das in Reihe zwischen zwei Drucksensoren angeordnet ist. Wenn das Coriolis-Massedurchflussmessgerät aufgrund zu großer Gasbeladung den Durchfluss nicht mehr genau genug Messen kann, wird der Durchfluss auf Basis einer Differenzdruckmessung zwischen den beiden Drucksensoren ermittelt. Wenn das Coriolis-Massedurchflussmessgerät genau genug messen kann, werden die Übertragungsfunktionen der Differenzdruckmessung und des Coriolis-Massedurchflussmessgeräts abgeglichen.

Das Messsystem nach US 2011/0161018 A1 umfasst einen Messwandler vom Vibrationstyp mit einem einlassseitigen Drucksensor zum Vorhersagen eines kritisch niedrigen Drucks am Auslass des Messwandlers aufgrund des Durchflussabhängigen Druckabfalls entlang des durchströmten Messrohrs.

US 2005/138993 A1 beschreibt einen Dichtemesser nach dem Vibrationsprinzip mit pulsierendem Druck zur Messung der Dichte der flüssigen Phase gasbeladener Medien. Aus der Mischungsdichte bei verschiedenen Druckwerten wird der jeweilige Gasvolumenanteil bestimmt, bei dessen Kenntnis schließlich die Dichte der flüssigen Phase berechnet werden kann. WO 2014/158376 A1 offenbart einen weiteren Dichtemesser.

Es ist die Aufgabe der vorliegenden Erfindung, ein Verfahren und eine Messvorrichtung anzugeben, welche eine möglichst einfache und zuverlässige Bestimmung der Kompressibilität eines Fluids ermöglichen, insbesondere zur Bestimmung der Dichte eines Mediums bei einem Referenzdruck.

Die Aufgabe wird erfindungsgemäß gelöst durch das Verfahren gemäß dem unabhängigen Patentanspruch 1 und die Vorrichtung gemäß dem unabhängigen Patentanspruch 8.

Das erfindungsgemäße Verfahren zum Bestimmen der Kompressibilität eines strömenden Fluids umfasst die folgenden Schritte:

Treiben eines Volumenstroms des Fluids mittels einer Pumpe, durch mindestens ein Messrohr eines vibronischen Dichtemessers bei einem ersten Druck, der mittels einer Drossel gehalten wird;
Bestimmen eines ersten Dichtemesswerts des strömenden Fluids bei dem ersten Druck;
Bestimmen eines ersten Druckmesswerts des strömenden Fluids bei dem ersten Druck;
Treiben eines Volumenstroms des strömenden Fluids mittels einer Pumpe, durch einen Dichtemesser bei einem zweiten Druck, der mittels einer Drossel gehalten wird;
Bestimmen eines zweiten Dichtemesswerts des Fluids bei dem zweiten Druck, der sich von dem ersten Druck unterscheidet;
Bestimmen eines zweiten Druckmesswerts des strömenden Fluids bei dem zweiten Druck;
Bestimmen der Kompressibilität des Fluids, anhand des ersten Dichtemesswerts des zweiten Dichtemesswerts, des ersten Druckmesswerts und des zweiten Druckmesswerts unter der Annahme, dass die Zusammensetzung des Fluids zwischen dem Erfassen des ersten Dichtemesswerts und des zweiten Dichtemesswerts unverändert ist,
wobei der Volumenstrom ein definierter Volumenstrom ist, der von einer Dosierpumpe mit einer Fördergenauigkeit von besser als 1% insbesondere besser als 0,5% getrieben wird,
durch eine Differenzbildung zwischen den Druckmesswerten des ersten Drucksensors (230a) und des zweiten Drucksensors (230b) der Druckabfall über dem Dichtemesser (220) berechnet wird, und anhand des Volumenstroms und des Druckabfalls eine Viskosität des Fluids ermittelt wird, wobei der Dichtemesswert des vibronischen Dichtemessers bezüglich einer Querempfindlichkeit zur Viskosität des Fluids korrigiert wird.

In einer Weiterbildung der Erfindung umfasst das Verfahren weiterhin das Berechnen eines dritten Dichtewerts bei einem dritten Druck anhand der ermittelten Kompressibilität und anhand mindestens eines der ersten und zweiten Dichtemesswerte, wobei sich der dritte Druck von dem ersten Druck und dem zweiten Druck unterscheidet, wobei der dritte Druck insbesondere außerhalb eines von dem ersten Druck und dem zweiten Druck begrenzten Intervalls liegt.

In einer Weiterbildung der Erfindung umfasst das Verfahren weiterhin das Berechnen eines Schallgeschwindigkeitswerts anhand der Kompressibilität und mindestens eines der Dichtemesswerte.

In einer Weiterbildung der Erfindung erfolgt die Bestimmung der Kompressibilität unter der Annahme einer konstanten Temperatur des Fluids bei dem ersten Druckmesswert und dem zweiten Druckmesswert erfolgt.

In einer Weiterbildung der Erfindung weist eine erste Temperatur des Fluids in dem Messrohr beim Erfassen des ersten Dichtemesswerts von einer zweiten Temperatur des Fluids in dem Messrohr beim Erfassen des zweiten Dichtemesswerts um nicht mehr als 5 °C, insbesondere nicht mehr als 2°C und bevorzugt nicht mehr als 1 °C ab.

In einer Weiterbildung der Erfindung umfasst das Bestimmen des ersten Dichtemesswerts und das Bestimmen des zweiten Dichtemesswerts, jeweils das Erfassen eines Eigenfrequenzwerts mindestens eines Biegeschwingungsmodes des Messrohrs.

In einer Weiterbildung der Erfindung hängt die Eigenfrequenz von dem mindestens einen Biegeschwingungsmodes von einer Biegesteifigkeit des Messrohrs ab, welche eine Querempfindlichkeit zum Druck des Fluids in dem Messrohr aufweist, wobei die druckabhänge Biegesteifigkeit des Messrohrs in die Bestimmung des Dichtemesswertes auf Basis der erfassten Eigenfrequenzen eingeht, wobei zum Bestimmen der druckabhängigen Biegesteifigkeit mindestens einer der erfassten Druckmesswerte verwendet wird.

Die erfindungsgemäße Messanordnung zum Bestimmen der Kompressibilität eines strömenden Fluids und oder einer von der Kompressibilität abhängigen Größe umfasst: einen Fluidpfad zum Führen eines Mediums; eine Pumpe, welche in dem Fluidpfad angeordnet ist, zum Treiben eines Volumenstroms des Mediums in dem Fluidpfad; einen Dichtemesser mit mindestens einem Oszillator welcher mindestens ein schwingfähiges Messrohr, zum Führen des Mediums aufweist, mit mindestens einer Erregeranordnung zum Anregen von Schwingungen des Messrohrs, und mit mindestens einer Sensoranordnung zum Erfassen mindestens einer Schwingungseigenschaft des Oszillators, wobei das Messrohr oder die Messrohre des mindestens einen Oszillators in dem Fluidpfad angeordnet ist bzw. sind; eine Drosselanordnung mit einem veränderbaren Strömungswiderstand, wobei der Dichtemesser zwischen der Pumpe und der Drosselanordnung in dem Fluidpfad angeordnet ist, wobei die Drosselanordnung dazu dient, bei einem konstanten Volumenstrom aufgrund unterschiedlicher Strömungswiderstände unterschiedliche statische Druckwerte in dem Dichtemesser zu bewirken; mindestens einen Drucksensor zum Erfassen eines Druckmesswerts dem Fluidpfad, wobei der Drucksensor zwischen der Pumpe und der Drosselanordnung in dem Fluidpfad angeordnet ist; eine Betriebs- und Auswerteeinheit, welche dazu eingerichtet ist, anhand mindestens zweier Dichtemesswerte und der zugehörigen Druckmesswerte, die bei unterschiedlichen Strömungswiderständen der Drosselanordnung erfasst wurden, einen Wert für die Kompressibilität des Fluids zu ermitteln,

wobei die Messanordnung weiterhin einen zweiten Drucksensor aufweist, wobei der Dichtemesser zwischen dem ersten Drucksensor und dem zweiten Drucksensor angeordnet ist,

wobei der zweite Drucksensor zwischen dem Dichtemesser und der Drosselanordnung angeordnet ist,

die Pumpe eine Dosierpumpe mit einer Fördergenauigkeit von besser als 1% insbesondere besser als 0,5% ist, und

die Betriebs- und Auswerteeinheit dazu eingerichtet ist, einen Viskositätsmesswert für das Fluid anhand des Volumenstroms und einer Differenz von im Wesentlichen gleichzeitig aufgenommenen Druckmesswerten des ersten Drucksensors und des zweiten Drucksensors zu bestimmen, und den Dichtemesswert anhand der Schwingungseigenschaft des Oszillators und des Viskositätsmesswerts zu bestimmen.

In einer Weiterbildung der Erfindung weist die Drosselanordnung zwei parallel geschaltete Rückschlagventile aufweist, von denen ein erstes Rückschlagventil einen niedrigeren Arbeitspunkt hat als ein zweites Rückschlagventil, und dem ersten Rückschlagventil ein Rückschlagventil-Sperrventil vorgeschaltet ist, welches insbesondere automatisch steuerbar ist.

In einer alternativen Weiterbildung der Erfindung weist die Drosselanordnung eine Blende mit einer einstellbaren Blendenöffnung auf.

In einer Weiterbildung der Erfindung ist die Betriebs- und Auswerteeinheit dazu eingerichtet, einen Druckmesswert für das Fluid, der einem Dichtemesswert zugeordnet ist, als Mittelwert von im Wesentlichen gleichzeitig aufgenommenen Druckmesswerten des ersten Drucksensors und des zweiten Drucksensors zu bestimmen.

In einer Weiterbildung der Erfindung ist die Betriebs- und Auswerteeinheit dazu eingerichtet, einen Dichtewert unter Referenzbedingungen, beispielsweise 1013 mbar, anhand des Dichtemesswerts, des zugeordneten Druckmesswerts und des ermittelten Werts für die Kompressibilität zu bestimmen.

Die Erfindung wird nun anhand der in den Zeichnungen dargestellten Ausführungsbeispiele näher erläutert. Es zeigt:

Fig. 1: ein Flussdiagramm eines Ausführungsbeispiels des erfindungsgemäßen Verfahrens;

Fig. 2a: eine schematische Darstellung einer Messanordnung;

Fig. 2b: eine schematische Darstellung einer Detailvariante der Messanordnung aus Fig. 2a; und

Fig. 3: eine schematische Darstellung eines Ausführungsbeispiels einer erfindungsgemäßen Messanordnung.

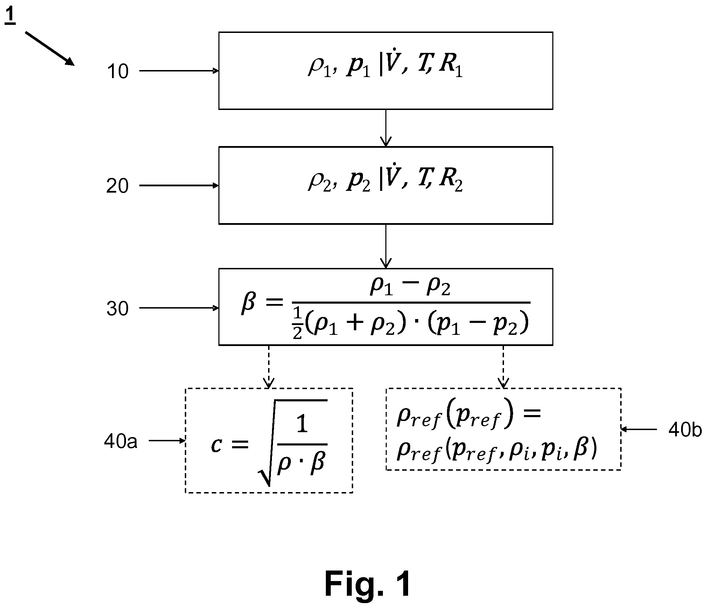

Das in Fig. 1 dargestellte Ausführungsbeispiel eines erfindungsgemäßen Verfahrens 1 umfasst in einem ersten Schritt 10 das Erfassen eines ersten Dichtemesswerts $\rho_1$ und eines zugehörigen ersten Druckmesswerts $p_1$ eines strömenden Fluids, wobei der erste Druck des strömenden Fluids dadurch erzeugt wird, dass das Fluid gegen einen ersten Strömungswiderstand $R_1$ einer Drosselanordnung mit einem variablen Strömungswiderstand gepumpt wird.

Nach Erfassen des ersten Dichtemesswerts $\rho_1$ und des zugehörigen ersten Druckmesswerts $p_1$ erfolgt in einem zweiten Schritt 20 bei einem zweiten Strömungswiderstand $R_2$ der Drosselanordnung das Erfassen eines zweiten Dichtemesswerts $\rho_2$ und eines zugehörigen zweiten Druckmesswerts $p_2$ eines strömenden Fluids, wobei sich der erste Strömungswiderstand von dem zweiten Strömungswiderstand unterscheidet. Bei einem im Wesentlichen konstanten Volumenstrom des Fluids durch die Drosselanordnung führt dies entsprechend zu unterschiedlichen Werten für den ersten statischen Druck und den zweiten statischen Druck des strömenden Mediums. So kann beispielsweise der erste Druck etwa 0,5 bis 1 bar betragen während der zweite Druck 5 bis 10 bar beträgt.

Die Dichtemessung kann beispielsweise durch Messen einer dichteabhängigen Resonanzfrequenz eines schwingenden Messrohrs erfolgen, das von dem Fluid durchströmt wird.

In einem dritten Schritt 30 wird schließlich auf Basis der beiden Dichtemesswerte $\rho_1$, $\rho_2$ und der zugehörigen Druckmesswerte $p_1$, $p_2$ die Kompressibilität $\beta$ des Fluids berechnet gemäß:

$$\beta = \frac{\rho_1 - \rho_2}{\frac{1}{2}(\rho_1 + \rho_2)\cdot(p_1 - p_2)} \quad (1)$$

Anknüpfend an die Ermittlung der Kompressibilität des Fluids kann in einem Schritt 40a die Schallgeschwindigkeit c des Fluids berechnet werden auf Basis eines Dichtewerts $\rho$ und eines dazu ermittelten Kompressibilitätswerts $\beta$ gemäß:

$$c = \sqrt{\frac{1}{\rho \cdot \beta}} \quad (2)$$

Der Dichtewert kann dabei beispielsweise das arithmetische Mittel der beiden Dichtemesswerte $\rho_1$, $\rho_2$ sein, auf deren Basis die Kompressibilität $\beta$ berechnet wurde.

Alternativ oder ergänzend kann anknüpfend an die Ermittlung der Kompressibilität des Fluids in einem Schritt 40b eine Referenzdichte $\rho_{ref}$ bei einem Referenzdruck $p_{ref}$ von beispielsweise 1013 mbar berechnet werden. Hierbei hängt die Referenzdichte ab von dem Referenzdruck $p_{ref}$, mindestens einem Wertepaar eines Druckmesswerts $p_i$ mit seinem zugehörigen Dichtemesswert $\rho_i$, sowie dem dazu ermittelten Wert für die Kompressibilität $\beta$ des Fluids.

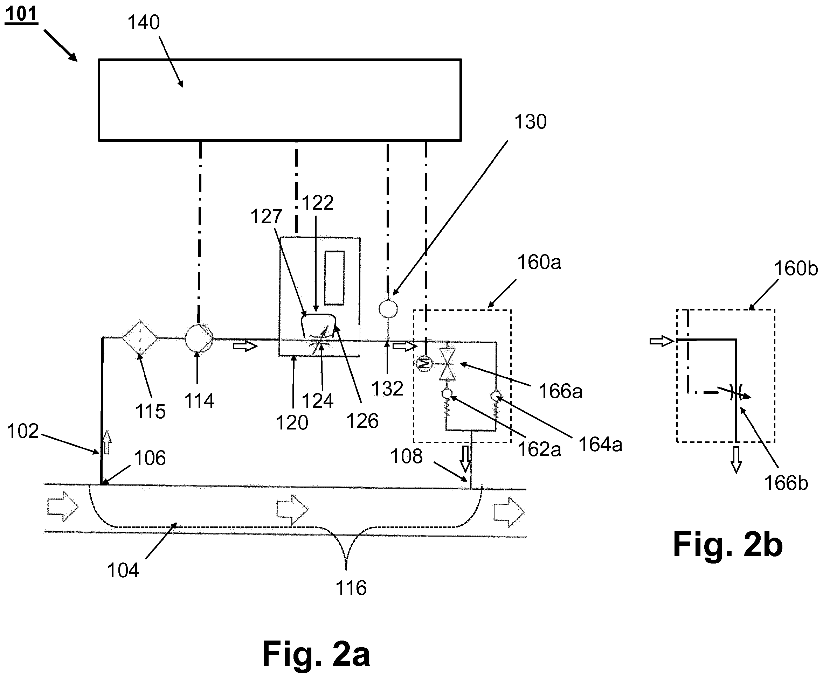

Die in Fig. 2a dargestellte Messanordnung 101 umfasst eine Entnahmeleitung 102, die zu einer Rohrleitung 104 zwischen einem ersten Anschlusspunkt 106 und einem zweiten Anschlusspunkt 108 parallel geführt ist. Die Messanordnung 101 umfasst in der Entnahmeleitung 102 weiterhin eine Mikrozahnringpumpe 114, wie sie von der Firma HNP erhältlich ist, oder eine andere Dosierpumpe mit einer Fördergenauigkeit von besser als 1% insbesondere besser als 0,5% zum Treiben eines definierten Volumenstroms durch den von der Entnahmeleitung 102 und darin angeordneten Komponenten gebildeten Fluidpfad 116. Die Entnahmeleitung weist beispielsweise einen Innendurchmesser von 4 mm auf. In der Entnahmeleitung 102 ist vor der Zahnringpumpe 114 noch ein Filterelement 115 angeordnet, das beispielsweise eine maximale Porengröße von nicht mehr als 20 μm, insbesondere nicht mehr als 10 μm und bevorzugt nicht mehr als 5 μm aufweist, um zu gewährleisten, dass nachfolgende Komponenten nicht verstopfen.

In der Entnahmeleitung 102 ist ein Dichtemesser 120 mit einem schwingfähigen Messrohr 122 angeordnet, welches mittels eines Erregers zu Biegeschwingungen anregbar ist, deren Resonanzfrequenz von der Dichte eines in dem Messrohr 122 enthaltenen Mediums abhängt. Das Messrohr weist einen Durchmesser von beispielsweise 160 μm auf und ist mittels MEMS-Technologie in Silizium präpariert. Die Resonanzfrequenz liegt bei einem niederviskosen Fluid mit einer Dichte von etwa $10^6$ g/m$^3$ beispielsweise in der Größenordnung von 20 kHz.

Die Gesamtlänge eines Fluidpfadabschnitts durch das Messrohr 122 und umgebende MEMS-Komponenten mit einem Innendurchmesser von 200 μm beträgt etwa 1 cm. Dieser Fluidpfadabschnitt hat einen vergleichsweise großen Strömungswiderstand, so dass es nicht praktikabel ist, den gesamten Volumenstrom durch die Entnahmeleitung 102 über diesen Flüssigkeitspfadabschnitt zu führen. Die zu erwartenden Volumenströme bei Druckabfällen von einigen Bar über dem Flüssigkeitspfadabschnitt durch das Messrohr 122 würden derart gering sein, dass das Medium in der Entnahmeleitung 102, insbesondere bei sich ändernden Eigenschaften des Mediums in der Rohrleitung 104 nicht zuverlässig repräsentativ wäre. Daher ist der Flüssigkeitspfadabschnitt durch die MEMS-Komponenten als Bypass 126 parallel zu einer Blende 124 geführt, wobei der Bypass 126 eine Bypasspfadlänge von weniger als 20 mm, insbesondere weniger als 15 mm, beispielsweise 10 mm aufweist. Die Blende 124 weist einen Durchmesser von 0,5 bis 2 mm auf welcher so bemessen ist, dass aufgrund des durch den Volumenstrom in der Entnahmeleitung 102, ein Druckgradient erzeugt wird der einen Anteil des Volumenstroms von beispielsweise 0,1% bis 5% durch den Bypass 126 treibt. Die MEMS-Komponenten umfassen weiterhin einen Temperatursensor 127, beispielsweise ein Halbleiterwiderstandselement, oder ein Pt-Widerstandselement, welches insbesondere eine Temperatur des Messrohrs 122 oder nahe des Messrohrs erfasst, die für die Temperatur des Mediums repräsentativ ist.

Die Messanordnung 101 umfasst weiterhin einen Drucksensor 130 zum Erfassen eines Druckmesswerts an einem Druckabgriffpunkt 132, welcher an dem Fluidpfad 116 zwischen der Zahnringpumpe 140 und einer Drosselanordnung 160a angeordnet ist. Genauer gesagt, ist der Druckabgriffpunkt hier in Strömungsrichtung unterhalb des Dichtemessers angeordnet.

Da jedoch über der Blende 124 bzw. dem Messrohr 122 ein Druckabfall erfolgt, der im Wesentlichen proportional zum Volumenstrom ist, ist der Druck am Druckabgriffpunkt 132 definitiv niedriger als der Mittlere Druck im Messrohr 122. Insofern ist es vorteilhaft einen weiteren Drucksensor zwischen der Pumpe und dem Messrohr vorzusehen, und einen mittleren Druck für das Fluid im Messrohr aus den Messwerten der beiden Drucksensoren unterhalb und oberhalb des Messrohrs zu berechnen. Dies ist insbesondere dann vorteilhaft wenn der tatsächliche Druck des Fluids im Messrohr von Interesse ist, beispielsweise, um davon ausgehend einen Dichtewert bei einem Referenzdruck zu berechnen. Für die Bestimmung der Kompressibilität ist jedoch ein zweiter Drucksensor ausdrücklich nicht erforderlich, denn bei einem konstanten Volumenstrom ist der Druckabfall über dem Messrohr konstant, so dass er nicht zur Druckdifferenz in Gleichung (1) beiträgt.

Die Drosselanordnung 160a umfasst zwei parallel geschaltete Rückschlagventile, von denen ein erstes Rückschlagventil 162a einen niedrigeren Arbeitspunkt hat als ein zweites Rückschlagventil 164a. Der erste Arbeitspunkt des ersten Rückschlagventils 162a liegt beispielsweise bei 0,5 - 1 bar, während der zweite Arbeitspunkt des zweiten Rückschlagventils 164a bei 5 - 10 bar liegt. Dem ersten Rückschlagventil 162a ist ein automatisch steuerbares Rückschlagventil-Sperrventil 166a vorgeschaltet. Wenn das Rückschlagventil-Sperrventil 166a geöffnet ist, kann der von der Zahnringpumpe 114 getriebene Volumenstrom über das erste Rückschlagventil 162a fließen, so dass der statische Druck des strömenden Fluids, durch den Arbeitspunkt des ersten Rückschlagventils 162a bestimmt ist. Wenn dagegen das Rückschlagventil-Sperrventil 166a geschlossen ist, fließt der Volumenstrom über das zweite Rückschlagventil 164a, so dass der statische Druck über den zweiten Arbeitspunkt bestimmt ist und damit einen deutlich höheren Wert aufweist. Mittels des Absperrventils 166a kann somit bei einem konstanten Volumenstrom der statische Druck alternierend durch den ersten Arbeitspunkt und dem zweiten Arbeitspunkt bestimmt werden. Welchen Wert der statische Druck des Fluids aufweist, kann mit dem Drucksensor 130 mit den zuvor erläuterten Einschränkungen ermittelt werden.

Die Messanordnung 101 umfasst weiter eine Betriebs- und Auswerteeinheit 140, welche dazu eingerichtet ist, anhand der Wertetupel für verschiedene statische Druckmesswerte, mit den jeweils zugehörigen Dichte- und ggf. Temperaturmesswerten des strömenden Fluids die Kompressibilität des Fluids zu bestimmen und damit einen Dichtewert des bei Referenzbedingungen, beispielsweise 1013 mbar zu ermitteln Gleichermaßen steuert die Betriebs- und Auswerteeinheit das Rückschlagventil-Sperrventil 166a zum Sperren des ersten Rückschlagventils 162 a.

Die elektrischen Schaltungen der Differenzdruckmessanordnung, des Dichtemessers 120 , sowie der Betriebs- und Auswerteeinheit sind vorzugsweise in der Zündschutzart Exi (eigensicher) ausgeführt. Die elektronische Schaltung Zahnringpumpe 114 ist vorzugsweise ebenfalls in einer Zündschutzart realisiert, beispielsweise in druckfester Kapselung gemäß der Klasse Ex-d.

In Fig. 2b ist eine Drosselanordnung 160b dargestellt, welche als Alternative zur in Fig. 2a dargestellten Drosselanaordnung 160a in dem Ausführungsbeispiel gemäß Fig. 2a eingesetzt werden kann. Die Drosselanordnung 160b weist eine Blende 166b mit veränderbarem Strömungsquerschnitt auf, wobei der Strömungsquerschnitt mit einem Stellantrieb einstellbar ist, der von der Betriebs- und Auswerteeinheit 140 gesteuert wird. Durch Variation des Stromungsquerschnitts kann der Druckabfall über der Blende bei gleichbleibendem Volumendurchfluß beispielsweis zwischen 0,1 und 10 bar variiert werden.

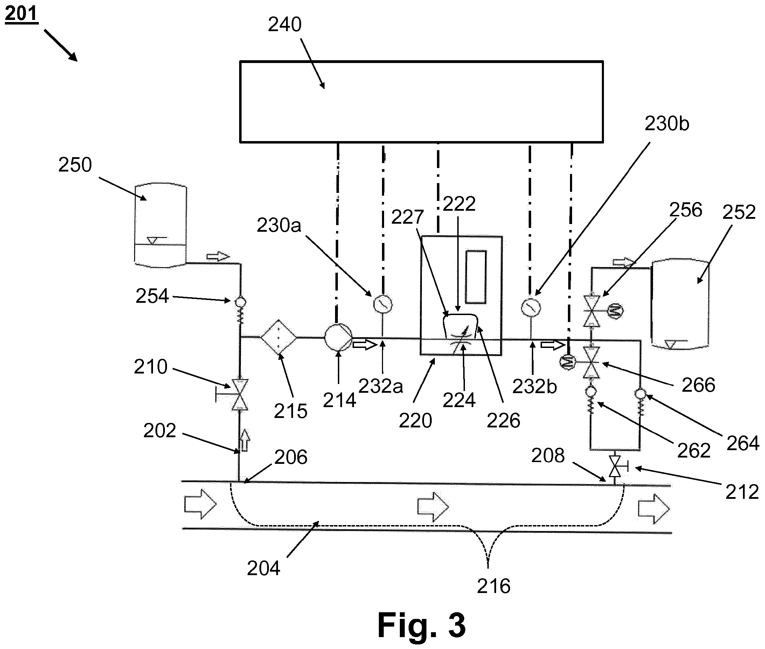

Das in Fig. 3 dargestellte Ausführungsbeispiel einer erfindungsgemäßen Messanordnung 201 umfasst alle Komponenten des ersten Ausführungsbeispiels. Detaillierte Erläuterungen zu den Komponenten des ersten Ausführungsbeispiels gelten für das zweite Ausführungsbeispiel entsprechend. Das zweite Ausführungsbeispiel enthält darüber hinaus weitere Komponenten, die eine Bestimmung der Viskosität des Fluids und damit eine Korrektur von viskositätsabhängigen Fehlern bei der Dichtemessung ermöglicht. Zusammen mit der erfindungsgemäßen Bestimmung der Kompressibilität kann auch für Medien mit höherer Viskosität ein noch genauerer Wert für die Dichte unter Referenzbedingungen angegeben werden.

Die Messanordnung 201 umfasst eine Entnahmeleitung 202, die zu einer Rohrleitung 204 zwischen einem ersten Anschlusspunkt 206 und einem zweiten Anschlusspunkt 208 parallel geführt ist. Die Messanordnung 201 umfasst in der Entnahmeleitung 202 weiterhin eine Mikrozahnringpumpe 214 zum Treiben eines definierten Volumenstroms durch den von der Entnahmeleitung 202 und darin angeordneten Komponenten gebildeten Fluidpfad 216. In der Entnahmeleitung 202 ist vor der Zahnringpumpe 114 noch ein Filterelement 215 angeordnet, um zu gewährleisten, dass nachfolgende Komponenten nicht verstopfen.

In der Entnahmeleitung 202 ist ein Dichtemesser 220 mit einem schwingfähigen Messrohr 222 angeordnet, welches mittels eines Erregers zu Biegeschwingungen anregbar ist, deren Resonanzfrequenz von der Dichte eines in dem Messrohr 222 enthaltenen Mediums abhängt. Der Flüssigkeitspfadabschnitt durch das Messrohr 222 und die anschließenden MEMS-Komponenten ist als Bypass 226 parallel zu einer Blende 224 geführt. Die Blende 224 weist einen Durchmesser von 0,5 bis 2 mm auf welcher so bemessen ist, dass aufgrund des durch den Volumenstrom in der Entnahmeleitung 202, ein Druckgradient erzeugt wird der einen Anteil des Volumenstroms von beispielsweise 0,1% bis 5% durch den Bypass 226 treibt. Die MEMS-Komponenten umfassen weiterhin einen Temperatursensor 227, beispielsweise ein Halbleiterwiderstandselement, oder ein Pt-Widerstandselement, welches insbesondere eine Temperatur des Messrohrs 222 oder nahe des Messrohrs erfasst, die für die Temperatur des Mediums repräsentativ ist.

Die Messanordnung 201 umfasst weiterhin einen ersten Drucksensor 230a zum Erfassen eines Druckmesswerts an einem ersten Druckabgriffpunkt 232a, welcher an dem Fluidpfad 216 zwischen der Zahnringpumpe 240 und dem Dichtemesser 220 angeordnet ist, und einen zweiten Drucksensor 230b zum Erfassen eines Druckmesswerts an einem zweiten Druckabgriffpunkt 232b, welcher an dem Fluidpfad 116 zwischen dem Dichtemesser 220 und einer Drosselanordnung 160a angeordnet ist.

Der Zweck der beiden Drucksensoren 230a und 230b ist hier zweifach. Zunächst werden die im Zusammenhang des ersten Ausführungsbeispiels erörterten Schwächen der Druckmessung mit nur einem Drucksensor überwunden, indem eine Mittelung der Duckmesswerte des ersten und des zweiten Drucksensors erfolgt.

Weiterhin kann durch eine Differenzbildung zwischen den Druckmesswerten des ersten Drucksensors 230a und des zweiten Drucksensors 230b der Druckabfall über dem Dichtemesser 220 berechnet werden, aus dem sich bei gegebenem Volumendurchfluss die Viskosität des Fluids ermitteln lässt.

Die Drosselanordnung 260 umfasst zwei parallel geschaltete Rückschlagventile, von denen ein erstes Rückschlagventil 262 einen niedrigeren Arbeitspunkt hat als ein zweites Rückschlagventil 264. Der erste Arbeitspunkt des ersten Rückschlagventils 262 liegt beispielsweise bei 0,5 - 1 bar, während der zweite Arbeitspunkt des zweiten Rückschlagventils 264 bei 5 - 10 bar liegt. Dem ersten Rückschlagventil 262 ist ein automatisch steuerbares Rückschlagventil-Sperrventil 266 vorgeschaltet. Wenn das Rückschlagventil-Sperrventil 266 geöffnet ist, kann der von der Zahnringpumpe 214 getriebene Volumenstrom über das erste Rückschlagventil 262 fließen, so dass der statische Druck des strömenden Fluids, durch den Arbeitspunkt des ersten Rückschlagventils 262 bestimmt ist. Wenn dagegen das Absperrventil 266 geschlossen ist, fließt der Volumenstrom über das zweite Rückschlagventil 264, so dass der statische Druck über den zweiten Arbeitspunkt bestimmt ist und damit einen deutlich höheren Wert aufweist. Mittels des Absperrventils 266 kann somit bei einem konstanten Volumenstrom der statische Druck alternierend durch den ersten Arbeitspunkt und dem zweiten Arbeitspunkt bestimmt werden. Welchen Wert der statische Druck des Fluids im Messrohr 222 aufweist, kann durch Mittelung der Druckmesswerte des ersten Drucksensor 230a und des zweiten Drucksensors 230b ermittelt werden.

Die Messanordnung 201 umfasst weiter eine Betriebs- und Auswerteeinheit 240, welche dazu eingerichtet ist, anhand der Werte für den Volumendurchfluss, und der zugehörigen Druckdifferenz einen aktuellen Viskositätsmesswert des Fluids zu bestimmen, und anhand einer gemessenen Resonanzfrequenz des Messrohrs bzw. einem daraus abgeleiteten Dichtemesswert einen bezüglich eines Viskositätseinflusses korrigierten Dichtemesswert zu berechnen. Weiterhin ist die Betriebs- und Auswerteeinheit 240 dazu geeignet, anhand von Wertetupeln für verschiedene gemittelte statische Druckmesswerte in dem Messrohr, mit den jeweils zugehörigen bezüglich des Viskositätseinflusses korrigierten Dichtemesswerten und ggf. Temperaturmesswerten des strömenden Fluids die Kompressibilität des Fluids zu bestimmen. Auf Basis dieser Werte eine Dichte des Fluids bei einem Referenzdruck, beispielsweise 1013 mbar berechnet werden.

Gleichermaßen steuert die Betriebs- und Auswerteeinheit das Rückschlagventil-Sperrventil 266 zum Sperren des ersten Rückschlagventils 262a.

Die Messanordnung 201 kann weiterhin einen Vorratsbehälter 250 und einen Abfallbehälter 252 für ein Hilfsmedium aufweisen. Das Hilfsmedium kann einerseits eine Reinigungsflüssigkeit sein, beispielsweise Benzin, oder ein Referenzmedium mit definierter Viskosität oder Dichte zum Kalibrieren der Messanordnung 201. Damit das Hilfsmedium nicht unkontrolliert in die Rohrleitung 204 gelangen kann, sind in der Entnahmeleitung 202 nahe dem ersten und zweiten Anschlusspunkt 206, 208 ein erstes bzw. Sperrventil 210, 212 vorgesehen. Der Vorratsbehälter 250 ist zwischen dem ersten Sperrventil 210 und dem Filter 215 mittels einer Stichleitung an die Entnahmeleitung angeschlossen, wobei in der Stichleitung ein Rückschlagventil 254 angeordnet ist. Der Abfallbehälter 252 ist zwischen dem zweiten Drucksensor 230b und der Drosselanordnung 260 mittels einer Stichleitung an die Entnahmeleitung angeschlossen, wobei in der Stichleitung ein Sperrventil 256 angeordnet ist.

**Bezugszeichenliste**

| | |
|---|---|
| 1 | Kompressibilitätsbestimmung |
| 10 | Erste Dichte- und Druckmessung |
| 20 | Zweite Dichte- und Druckmessung |
| 30 | Berechnung der Kompressibilität |
| 40a | Berechnung der Schallgeschwindigkeit |
| 40b | Berechnung einer Referenzdichte |
| 101 | Messanordnung |
| 102 | Entnahmeleitung |
| 104 | Rohrleitung |
| 106 | Anschlusspunkt |
| 108 | Anschlusspunkt |
| 114 | Pumpe |
| 115 | Filterelement |
| 116 | Fluidpfad |
| 120 | Dichtemesser |
| 122 | Messrohr |
| 124 | Blende |
| 126 | Bypass |
| 127 | Temperatursensor |
| 130 | Drucksensor |
| 132 | Druckabgriffpunkt |
| 140 | Auswertungseinheit |
| 160a | Drosselanordnung |
| 162a | Rückschlagventil mit niedrigerem Schwellwert |
| 164a | Rückschlagventil mit höherem Schwellwert |
| 166a | Rückschlagventil-Sperrventil |
| 160b | Drosselanordnung |
| 166b | Drossel mit kontinuierlich einstellbarem Strömungsquerschnitt |
| 201 | Messanordnung |
| 202 | Entnahmeleitung |
| 204 | Rohrleitung |
| 206 | Anschlusspunkt |
| 208 | Anschlusspunkt |
| 210 | Sperrventil |
| 214 | Pumpe |
| 215 | Filterelement |
| 216 | Fluidpfad |
| 220 | Dichtemesser |
| 222 | Messrohr |
| 224 | Blende |
| 226 | Bypass |
| 227 | Temperatursensor |
| 230a | erster Drucksensor |
| 230b | zweiter Drucksensor |
| 232a | erster Druckabgriffpunkt |
| 232b | zweiter Druckabgriffpunkt |
| 240 | Auswertungseinheit |
| 250 | Vorratsbehälter |
| 252 | Abfallbehälter |
| 254 | Rückschlagventil |
| 256 | Sperrventil |
| 262 | Rückschlagventil mit niedrigerem Schwellwert |
| 264 | Rückschlagventil mit höherem Schwellwert |
| 266 | Rückschlagventil-Sperrventil |

**Patentansprüche**

**1.** Verfahren (1) zum Bestimmen der Kompressibilität eines strömenden Fluids, wobei das Verfahren die folgenden Schritte umfasst:

Treiben eines Volumenstroms des Fluids mittels einer Pumpe, durch mindestens ein Messrohr eines vibronischen Dichtemessers bei einem ersten Druck, der mittels einer Drossel gehalten wird, wobei ein erster Drucksensor und ein zweiter Drucksensor zwischen der Pumpe und der Drossel angeordnet sind, wobei der Dichtemesser zwischen dem ersten Drucksensor und dem zweiten Drucksensor angeordnet ist;
Bestimmen eines ersten Dichtemesswerts des strömenden Fluids bei dem ersten Druck (10);
Bestimmen eines ersten Druckmesswerts des strömenden Fluids bei dem ersten Druck (10);
Treiben eines Volumenstroms des strömenden Fluids mittels einer Pumpe, durch einen Dichtemesser bei einem zweiten Druck, der mittels einer Drossel gehalten wird;
Bestimmen eines zweiten Dichtemesswerts des Fluids bei dem zweiten Druck, der sich von dem ersten Druck unterscheidet (20);
Bestimmen eines zweiten Druckmesswerts des strömenden Fluids bei dem zweiten Druck (20);
Bestimmen der Kompressibilität des Fluids, anhand des ersten Dichtemesswerts des zweiten Dichtemesswerts, des ersten Druckmesswerts und des zweiten Druckmesswerts unter der Annahme, dass die Zusammensetzung des Fluids zwischen dem Erfassen des ersten Dichtemesswerts und des zweiten Dichtemesswerts unverändert ist (30),
**dadurch gekennzeichnet, dass**
der Volumenstrom ein definierter Volumenstrom ist, der von einer Dosierpumpe mit einer Fördergenauigkeit von besser als 1% insbesondere besser als 0,5% getrieben wird,
durch eine Differenzbildung zwischen den Druckmesswerten des ersten Drucksensors (230a) und des zweiten Drucksensors (230b) der Druckabfall über dem Dichtemesser (220) berechnet wird, und
anhand des Volumenstroms und des Druckabfalls eine Viskosität des Fluids ermittelt wird, wobei der Dichtemesswert des vibronischen Dichtemessers bezüglich einer Querempfindlichkeit zur Viskosität des Fluids korrigiert wird.

**2.** Verfahren (1) nach Anspruch 1, weiterhin umfassend:
das Berechnen eines dritten Dichtewerts (40b) bei einem dritten Druck anhand der ermittelten Kompressibilität und anhand mindestens eines der ersten und zweiten Dichtemesswerte, wobei sich der dritte Druck von dem ersten Druck und dem zweiten Druck unterscheidet, wobei der dritte Druck insbesondere außerhalb eines von dem ersten Druck und dem zweiten Druck begrenzten Intervalls liegt.

3. Verfahren nach Anspruch 1 oder 2, weiterhin umfassend:
das Berechnen eines Schallgeschwindigkeitswerts (40a) anhand der Kompressibilität und mindestens eines der Dichtemesswerte.

4. Verfahren nach einem der vorhergehenden Ansprüche wobei die Bestimmung der Kompressibilität unter der Annahme einer konstanten Temperatur des Fluids bei dem ersten Druckmesswert und dem zweiten Druckmesswert erfolgt.

5. Verfahren nach einem der vorhergehenden Ansprüche, wobei eine erste Temperatur des Fluids in dem Messrohr beim Erfassen des ersten Dichtemesswerts von einer zweiten Temperatur des Fluids in dem Messrohr beim Erfassen des zweiten Dichtemesswerts um nicht mehr als 5 °C, insbesondere nicht mehr als 2°C und bevorzugt nicht mehr als 1 °C abweicht.

6. Verfahren nach einem der vorhergehenden Ansprüche, wobei das Bestimmen des ersten Dichtemesswerts und das Bestimmen des zweiten Dichtemesswerts, jeweils das Erfassen eines Eigenfrequenzwerts mindestens eines Biegeschwingungsmodes des Messrohrs umfasst.

7. Verfahren nach Anspruch 6, wobei die Eigenfrequenz von dem mindestens einen Biegeschwingungsmodes von einer Biegesteifigkeit des Messrohrs abhängt, welche eine Querempfindlichkeit zum Druck des Fluids in dem Messrohr aufweist, wobei die druckabhänge Biegesteifigkeit des Messrohrs in die Bestimmung des Dichtemesswertes auf Basis der erfassten Eigenfrequenzen eingeht, wobei zum Bestimmen der druckabhängigen Biegesteifigkeit mindestens einer der erfassten Druckmesswerte verwendet wird.

8. Messanordnung (201) zum Bestimmen der Kompressibilität eines strömenden Fluids und oder einer von der Kompressibilität abhängigen Größe, umfassend:

einen Fluidpfad (216) zum Führen eines Mediums;
eine Pumpe (214), welche in dem Fluidpfad (216) angeordnet ist, zum Treiben eines Volumenstroms des Mediums in dem Fluidpfad (116; 216);

einen Dichtemesser (220) mit mindestens einem Oszillator welcher mindestens ein schwingfähiges Messrohr (222), zum Führen des Mediums aufweist, mit mindestens einer Erregeranordnung zum Anregen von Schwingungen des Messrohrs, und mit mindestens einer Sensoranordnung zum Erfassen mindestens einer Schwingungseigenschaft des Oszillators, wobei das Messrohr oder die Messrohre des mindestens einen Oszillators in dem Fluidpfad angeordnet ist bzw. sind;
eine Drosselanordnung (262, 264, 266) mit einem veränderbaren Strömungswiderstand, wobei der Dichtemesser (220) zwischen der Pumpe (214) und der Drosselanordnung (262, 264, 266) in dem Fluidpfad angeordnet ist, wobei die Drosselanordnung dazu dient, bei einem konstanten Volumenstrom aufgrund unterschiedlicher Strömungswiderstände unterschiedliche statische Druckwerte in dem Dichtemesser (220) zu bewirken;
mindestens einen Drucksensor (230a) zum Erfassen eines Druckmesswerts in dem Fluidpfad (216), wobei der Drucksensor zwischen der Pumpe (214) und der Drosselanordnung (262, 264, 266) in dem Fluidpfad (116; 216) angeordnet ist;
eine Betriebs- und Auswerteeinheit (240), welche dazu eingerichtet ist, anhand mindestens zweier Dichtemesswerte und der zugehörigen Druckmesswerte, die bei unterschiedlichen Strömungswiderständen der Drosselanordnung (262, 264, 266) erfasst wurden, einen Wert für die Kompressibilität des Fluids zu ermitteln, **dadurch gekennzeichnet, dass**
die Messanordnung weiterhin einen zweiten Drucksensor (230b) aufweist, wobei der Dichtemesser (220) zwischen dem ersten Drucksensor (230a) und dem zweiten Drucksensor (230b) angeordnet ist,
wobei der zweite Drucksensor (230b) zwischen dem Dichtemesser (220) und der Drosselanordnung (262, 264, 266) angeordnet ist,
die Pumpe (214) eine Dosierpumpe mit einer Fördergenauigkeit von besser als 1% insbesondere besser als 0,5% ist, und
die Betriebs- und Auswerteeinheit (240) dazu eingerichtet ist, einen Viskositätsmesswert für das Fluid anhand des Volumenstroms und einer Differenz von im Wesentlichen gleichzeitig aufgenommenen Druckmesswerten des ersten Drucksensors und des zweiten Drucksensors zu bestimmen, und den Dichtemesswert anhand der Schwingungseigenschaft des Oszillators und des Viskositätsmesswerts zu bestimmen.

9. Messanordnung nach Anspruch 8, wobei

die Drosselanordnung (262, 264, 266) zwei parallel geschaltete Rückschlagventile aufweist, von denen ein erstes Rückschlagventil (262) einen niedrigeren Arbeitspunkt hat als ein zweites Rückschlagventil (264), und

dem ersten Rückschlagventil (262) ein Rückschlagventil-Sperrventil (266) vorgeschaltet ist, welches insbesondere automatisch steuerbar ist.

10. Messanordnung nach Anspruch 8, wobei
die Drosselanordnung (160b) eine Blende (166b) mit einer einstellbaren Blendenöffnung aufweist.

11. Messanordnung (201) nach einem der Ansprüche 8 bis 10, wobei
die Betriebs- und Auswerteeinheit (240) dazu eingerichtet ist, einen Druckmesswert für das Fluid, der einem Dichtemesswert zugeordnet ist, als Mittelwert von im Wesentlichen gleichzeitig aufgenommenen Druckmesswerten des ersten Drucksensors und des zweiten Drucksensors zu bestimmen.

12. Messanordnung (201) nach einem der Ansprüche 8 bis 11, wobei
die Betriebs- und Auswerteeinheit (240) dazu eingerichtet ist, einen Viskositätsmesswert für das Fluid anhand des Volumenstroms und einer Differenz von im Wesentlichen gleichzeitig aufgenommenen Druckmesswerten des ersten Drucksensors (230a) und des zweiten Drucksensors (230b) zu bestimmen, und den Dichtemesswert anhand der Schwingungseigenschaft des Oszillators und des Viskositätsmesswerts zu bestimmen.

13. Messanordnung nach einem der Ansprüche 8 bis 12, wobei
die Betriebs- und Auswerteeinheit (240) dazu eingerichtet ist, einen Dichtewert unter Referenzbedingungen, beispielsweise 1013 mbar, anhand des Dichtemesswerts, des zugeordneten Druckmesswerts und des ermittelten Werts für die Kompressibilität zu bestimmen.

**Claims**

1. A method (1) for determining the compressibility of a flowing fluid, the method comprising the following steps:

Driving a volumetric flow of the fluid by means of a pump, through at least one measuring tube of a vibronic density meter at a first pressure maintained by means of a throttle, a first pressure sensor and a second pressure sensor being arranged between the pump and the throttle, the density meter being arranged between the first pressure sensor and the second pressure sensor;
Determining a first density measurement of the flowing fluid at the first pressure (10);
Determining a first measured pressure value of the flowing fluid at the first pressure (10);
Driving a volume flow of the flowing fluid by means of a pump, through a density meter at a second pressure which is maintained by means of a throttle;
Determining a second density reading of the fluid at the second pressure, which is different from the first pressure (20);
Determining a second measured pressure value of the flowing fluid at the second pressure (20);
Determining the compressibility of the fluid, using the first density measurement value, the second density measurement value, the first pressure measurement value and the second pressure measurement value, assuming that the composition of the fluid is unchanged between the detection of the first density measurement value and the second density measurement value (30),
**characterized in that**
the volume flow is a defined volume flow which is driven by a dosing pump with a delivery accuracy of better than 1%, in particular better than 0.5%,
the pressure drop across the density meter (220) is calculated by forming a difference between the measured pressure values of the first pressure sen sensor (230a) and the second pressure sensor (230b), and
a viscosity of the fluid is determined on the basis of the volume flow and the pressure drop, whereby the measured density value of the vibro nical density meter is corrected with regard to a cross-sensitivity to the viscosity of the fluid.

2. The method (1) according to claim 1, further comprising:
calculating a third density value (40b) at a third pressure using the determined compressibility and using at least one of the first and second density measured values, wherein the third pressure differs from the first pressure and the second pressure, wherein the third pressure lies in particular outside an interval delimited by the first pressure and the second pressure.

3. Method according to claim 1 or 2, further comprising:
calculating a sound velocity value (40a) based on the compressibility lity and at least one of the measured density values.

4. Method according to one of the preceding claims, wherein the compressibility is determined assuming a constant temperature of the fluid at the first pressure measurement value and the second pressure measurement value.

5. Method according to one of the preceding claims, wherein a first temperature of the fluid in the measuring tube when detecting the first density measurement value deviates from a second temperature of the fluid in the measuring tube when detecting the second density measurement value by no more than 5 °C, in particular no more than 2 °C and preferably no more than 1 °C.

6. Method according to one of the preceding claims, wherein the determination of the first density measurement value and the determination of the second density measurement value each comprise the detection of a natural frequency value of at least one bending vibration mode of the measuring tube.

7. Method according to claim 6, wherein the natural frequency of the at least one bending vibration mode depends on a bending stiffness of the measuring tube which has a cross-sensitivity to the pressure of the fluid in the measuring tube, wherein the pressure-dependent bending stiffness of the measuring tube is included in the determination of the density measured value on the basis of the detected natural frequencies, wherein at least one of the detected pressure measured values is used to determine the pressure-dependent bending stiffness.

8. Measuring arrangement (201) for determining the compressibility of a flowing fluid and or a variable dependent on the compressibility, comprising:

a fluid path (216) for guiding a medium;
a pump (214) disposed in the fluid path (216) for driving a volumetric flow of the medium in the fluid path (116; 216);
a density meter (220) with at least one oscillator which has at least one oscillating measuring tube (222) for guiding the medium, with at least one exciter arrangement for exciting oscillations of the measuring tube, and with at least one sensor arrangement for detecting at least one oscillation characteristic of the oscillator, the measuring tube or the measuring tubes of the at least one oscillator being arranged in the fluid path;
a throttle arrangement (262, 264, 266) with a variable flow resistance, the density meter (220) being arranged between the pump (214) and the throttle arrangement (262, 264, 266) in the fluid path, the throttle arrangement serving to bring about different static pressure values in the density meter (220) at a constant volume flow due to different flow resistances;

at least one pressure sensor (230a) for detecting a measured pressure value in the fluid path (216), wherein the pressure sensor is arranged between the pump (214) and the throttle arrangement (262, 264, 266) in the fluid path (116; 216);
an operating and evaluation unit (240), which is set up to determine a value for the compressibility of the fluid using at least two measured density values and the associated measured pressure values, which were recorded at different flow resistances of the throttle arrangement (262, 264, 266),
**characterized in that**
the measuring arrangement further comprises a second pressure sensor (230b), wherein the density meter (220) is arranged between the first pressure sensor (230a) and the second pressure sensor (230b),
wherein the second pressure sensor (230b) is arranged between the density meter (220) and the throttle arrangement (262, 264, 266),
the pump (214) is a metering pump with a delivery accuracy of better than 1%, in particular better than 0.5%, and
the operating and evaluation unit (240) is set up to determine a viscosity measurement value for the fluid on the basis of the volume flow and a difference between substantially simultaneously recorded pressure measurement values of the first pressure sensor and the second pressure sensor, and to determine the density measurement value on the basis of the oscillation characteristic of the oscillator and the viscosity measurement value.

9. Measuring arrangement according to claim 8, wherein

the throttle arrangement (262, 264, 266) has two non-return valves connected in parallel, of which a first non-return valve (262) has a lower operating point than a second non-return valve (264), and
a non-return valve shut-off valve (266) is connected upstream of the first non-return valve (262), which in particular can be controlled automatically.

10. Measuring arrangement according to claim 8, wherein
the throttle arrangement (160b) has an orifice (166b) with an adjustable orifice opening.

11. Measuring arrangement (201) according to any one of claims 8 to 10, wherein
the operating and evaluation unit (240) is set up to determine a measured pressure value for the fluid, which is associated with a measured density value, as an average value of pressure measured values of the first pressure sensor and the second pressure sensor recorded substantially simultaneously.

**12.** Measuring arrangement (201) according to any one of claims 8 to 11, wherein
the operating and evaluation unit (240) is arranged to determine a viscosity measurement value for the fluid on the basis of the volume flow and a difference between substantially simultaneously recorded pressure measurement values of the first pressure sensor (230a) and the second pressure sensor (230b), and to determine the density measurement value on the basis of the oscillation characteristic of the oscillator and the viscosity measurement value.

**13.** Measuring arrangement according to one of claims 8 to 12, wherein
the operating and evaluation unit (240) is set up to determine a density value under reference conditions, for example 1013 mbar, using the measured density value, the associated measured pressure value and the determined value for the compressibility.

**Revendications**

**1.** Procédé (1) pour déterminer la compressibilité d'un fluide en écoulement, le procédé comprenant les étapes suivantes :

Pousser un débit volumétrique du fluide au moyen d'une pompe, à travers au moins un tube de mesure d'un densimètre vibronique à une première pression maintenue au moyen d'un étranglement, dans lequel un premier capteur de pression et un second capteur de pression sont disposés entre la pompe et l'étranglement, le densimètre étant disposé entre le premier capteur de pression et le second capteur de pression ;
la détermination d'une première mesure de densité du fluide s'écoulant à la première pression (10) ;
déterminer une première mesure de pression du fluide en écoulement à la première pression (10) ;
la propulsion d'un débit volumétrique du fluide en écoulement au moyen d'une pompe, par un densimètre à une deuxième pression maintenue au moyen d'un étranglement ;
déterminer une deuxième mesure de densité du fluide à la deuxième pression, qui est différente de la première pression (20) ;
déterminer une deuxième mesure de pression du fluide en écoulement à la deuxième pression (20) ;
déterminer la compressibilité du fluide à partir de la première valeur de mesure de densité, de la deuxième valeur de mesure de densité, de la première valeur de mesure de pression et de la deuxième valeur de mesure de pression en supposant que la composition du fluide est inchangée entre la détection de la première valeur de mesure de densité et la détection de la deuxième valeur de mesure de densité (30),
**caractérisé en ce que**
le débit volumique est un débit volumique défini, qui est entraîné par une pompe de dosage avec une précision de refoulement meilleure que 1%, en particulier meilleure que 0,5%,
la chute de pression à travers le densimètre (220) est calculée par une formation de différence entre les valeurs de mesure de pression du premier sen sen (230a) et du deuxième capteur de pression (230b), et
une viscosité du fluide est déterminée à l'aide du débit volumique et de la chute de pression, la valeur de mesure de densité du densimètre vibro nique étant corrigée par rapport à une sensibilité transversale à la viscosité du fluide

**2.** Procédé (1) selon la revendication 1, comprenant en outre :

le calcul d'une troisième valeur de densité (40b) à une troisième pression à l'aide de la compressibilité déterminée et à l'aide d'au moins une des première et deuxième valeurs de mesure de densité , la troisième pression étant différente de la première pression et de la deuxième pression, la troisième pression se situant en particulier en dehors d'un intervalle délimité par la première pression et la deuxième pression

**3.** Procédé selon la revendication 1 ou 2, comprenant en outre :
le calcul d'une valeur de vitesse du son (40a) sur la base de la compressibi lité et d'au moins une des valeurs de mesure de densité

**4.** Procédé selon l'une quelconque des revendications précédentes, dans lequel la détermination de la compressibilité est effectuée en supposant que la température du fluide est constante pour la première valeur de mesure de pression et la deuxième valeur de mesure de pression.

**5.** Procédé selon l'une quelconque des revendications précédentes, dans lequel une première température du fluide dans le tube de mesure lors de la détection de la première valeur de mesure de densité ne s'écarte pas d'une deuxième température du fluide dans le tube de mesure lors de la détection de la deuxième valeur de mesure de densité de plus de 5 °C, en particulier de plus de 2 °C et de préférence de plus de 1 °C.

6. Procédé selon l'une quelconque des revendications précédentes, dans lequel la détermination de la première valeur de mesure de densité et la détermination de la deuxième valeur de mesure de densité comprennent chacune la détection d'une valeur de fréquence propre d'au moins un mode de vibration de flexion du tube de mesure

7. Procédé selon la revendication 6, dans lequel la fréquence propre du au moins un mode de vibration en flexion dépend d'une rigidité en flexion du tube de mesure qui présente une sensibilité croisée à la pression du fluide dans le tube de mesure, la rigidité en flexion dépendante de la pression du tube de mesure intervenant dans la détermination de la valeur de mesure de densité sur la base des fréquences propres détectées, au moins une des valeurs de mesure de pression détectées étant utilisée pour déterminer la rigidité en flexion dépendante de la pression..

8. Dispositif de mesure (201) pour déterminer la compressibilité d'un fluide en écoulement et ou une grandeur dépendant de la compressibilité, comprenant :

un chemin de fluide (216) pour guider un milieu ; une pompe (214) disposée dans le trajet de fluide (216) pour entraîner un débit volumétrique du milieu dans le trajet de fluide (116 ; 216) ; un densimètre (220) avec au moins un oscillateur qui présente au moins un tube de mesure (222) capable d'osciller, pour guider le fluide, avec au moins un dispositif d'excitation pour exciter des oscillations du tube de mesure, et avec au moins un dispositif de détection pour détecter au moins une propriété d'oscillation de l'oscillateur, le tube de mesure ou les tubes de mesure du au moins un oscillateur étant disposé (s) dans le trajet de fluide ; un ensemble d'étranglement (262, 264, 266) ayant une résistance à l'écoulement variable, le densimètre (220) étant disposé entre la pompe (214) et l'ensemble d'étranglement (262, 264, 266) dans le trajet de fluide, l'ensemble d'étranglement étant destiné à provoquer des valeurs de pression statique différentes dans le densimètre (220) à un débit volumique constant en raison de résistances à l'écoulement différentes ; au moins un capteur de pression (230a) pour détecter une mesure de pression dans le trajet de fluide (216), le capteur de pression étant disposé entre la pompe (214) et l'ensemble d'étranglement (262, 264, 266) dans le trajet de fluide (116 ; 216) ; une unité de fonctionnement et d'évaluation (240) qui est conçue pour déterminer une valeur pour la compressibilité du fluide à l'aide d'au moins deux valeurs de mesure de densité et des valeurs de mesure de pression correspondantes qui ont été saisies pour des résistances à l'écoulement différentes du dispositif d'étranglement (262, 264, 266), **caractérisé en ce que** l'ensemble de mesure comprend en outre un deuxième capteur de pression (230b), le densimètre (220) étant disposé entre le premier capteur de pression (230a) et le deuxième capteur de pression (230b), dans lequel le deuxième capteur de pression (230b) est disposé entre le densimètre (220) et l'ensemble d'étranglement (262, 264, 266), la pompe (214) est une pompe de dosage ayant une précision de débit meilleure que 1 %, en particulier meilleure que 0,5 %, et l'unité de fonctionnement et d'évaluation (240) est conçue pour déterminer une valeur de mesure de viscosité pour le fluide à l'aide du débit volumétrique et d'une différence de valeurs de mesure de pression enregistrées sensiblement simultanément par le premier capteur de pression et le deuxième capteur de pression, et pour déterminer la valeur de mesure de densité à l'aide de la qualité d'oscillation de l'oscillateur et de la valeur de mesure de viscosité

9. Dispositif de mesure selon la revendication 8, dans lequel

l'agencement d'étranglement (262, 264, 266) présente deux clapets anti-retour montés en parallèle, dont un premier clapet anti-retour (262) a un point de fonctionnement plus bas qu'un deuxième clapet anti-retour (264), et en amont du premier clapet anti-retour (262) est monté un clapet anti-retour d'arrêt (266), qui peut être commandé en particulier automatiquement.

10. Dispositif de mesure selon la revendication 8, dans lequel l'ensemble d'étranglement (160b) comprend un diaphragme (166b) ayant une ouverture de diaphragme réglable.

11. Dispositif de mesure (201) selon l'une des revendications 8 à 10, dans lequel l'unité de fonctionnement et d'évaluation (240) est conçue pour déterminer une valeur de mesure de pression pour le fluide, qui est associée à une valeur de mesure de densité, comme valeur moyenne de valeurs de mesure de pression enregistrées sensiblement simultanément par le premier capteur de pression et le deuxième capteur de pression

**12.** Dispositif de mesure (201) selon l'une quelconque des revendications 8 à 11, dans lequel l'unité de fonctionnement et d'évaluation (240) est adaptée pour déterminer une valeur de mesure de viscosité pour le fluide à l'aide du débit volumétrique et d'une différence de valeurs de mesure de pression enregistrées sensiblement simultanément par le premier capteur de pression (230a) et le deuxième capteur de pression (230b), et pour déterminer la valeur de mesure de densité à l'aide de la propriété d'oscillation de l'oscillateur et de la valeur de mesure de viscosité

**13.** Dispositif de mesure selon l'une des revendications 8 à 12, dans lequel l'unité de fonctionnement et d'évaluation (240) est conçue pour déterminer une valeur de densité dans des conditions de référence, par exemple 1013 mbar, à l'aide de la valeur de mesure de densité, de la valeur de mesure de pression associée et de la valeur déterminée pour la compressibilité.

EP 3 350 567 B1

**1**

$$\rho_1, p_1 \,|\, \dot{V}, T, R_1$$

10

$$\rho_2, p_2 \,|\, \dot{V}, T, R_2$$

20

$$\beta = \frac{\rho_1 - \rho_2}{\frac{1}{2}(\rho_1 + \rho_2) \cdot (p_1 - p_2)}$$

30

$$c = \sqrt{\frac{1}{\rho \cdot \beta}}$$

40a

$$\rho_{ref}(p_{ref}) = \rho_{ref}(p_{ref}, \rho_i, p_i, \beta)$$

40b

**Fig. 1**

**Fig. 2a**

**Fig. 2b**

EP 3 350 567 B1

**Fig. 3**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2008053220 A1
- CA 2622602 A1
- US 20110161018 A1
- US 2005138993 A1
- WO 2014158376 A1